# FASCICULE DE BREVET EUROPEEN

(11) **EP 1 507 749 B1**
(45) Date de publication et mention de la délivrance du brevet: **03.08.2011**
(21) Numéro de dépôt: 03755180.1
(22) Date de dépôt: 22.05.2003
(51) Int. Cl.: C04B 28/00

(54) **CIMENT GEOPOLYMERIQUE A BASE DE POLY(SIALATE-DISILOXO) ET PROCEDE D OBTENTION**
GEOPOLYMERZEMENT AUF BASIS VON POLY(SIALATE-DISILOXO) UND VERFAHREN ZUR HERSTELLUNG
POLY(SIALATE-DISILOXO)-BASED GEOPOLYMERIC CEMENT AND PRODUCTION METHOD THEREOF

(30) Priorité: 27.05.2002 FR 0206406
(43) Date de publication de la demande: 23.02.2005
(73) Titulaire: Cordi-Geopolymere S.A., 02100 Saint-Quentin (FR); Davidovits, Joseph, F-02100 Saint-Quentin (FR)
(72) Inventeur: DAVIDOVITS, Joseph, F-02100 Saint-Quentin (FR); DAVIDOVITS, Ralph, F-02100 Saint-Quentin (FR)
(86) Numéro de dépôt international: PCT/FR2003/001545
(87) Numéro de publication internationale: WO 2003/099738

(56) Documents cités:
- FR-A- 2 669 918
- US-A- 4 642 137
- US-A- 5 342 595
- US-A- 5 798 307

## Description

La présente invention concerne un nouveau type de ciment géopolymèrique destiné à la construction. Ce ciment est appelé ciment géopolymèrique car il est à base de géopolymère minéral, constitué d'alumino-silicates alcalins, plus connus sous l'appellation de poly(sialate), poly(sialate-siloxo) et/ou poly(sialate-disiloxo). Dans le cas de la présente invention, le ciment géopolymèrique est à base de poly(sialate-disiloxo).

### Techniques antérieures.

On distingue deux types de ciments: les ciments hydrauliques et les ciments géopolymèriques. Les ciments géopolymèriques résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

Le terme poly(sialate) a été adopté pour désigner les géopolymères alumino-silicates. Le réseau sialate est constitué par des tétraèdres SiO₄ et AlO₄ alternativement liés par des atomes d'oxygène. Les cations (Na⁺, K⁺, Ca⁺⁺, H₃O⁺) présents dans les cavités structurales du poly(sialate) équilibrent la charge négative de Al³⁺en coordination (IV). La formule empirique des Polysialates est: Mₙ{-(SiO₂)_{z}-AlO₂}ₙ, wH₂O, avec M représentant le cation K, Na ou Ca et « n » le degré de polymérisation; « z » est égal à 1, 2, 3 ou plus, jusque 32. Les polymères à réseau tridimensionnel (3D) sont de type:

| | | |
|---|---|---|
| Poly(sialate) Mₙ-(-Si-O-Al-O-)ₙ | M-PS | Si:Al=1:1 |
| Poly(sialate-siloxo) Mₙ-(Si-O-Al-O-Si-O-)ₙ | M-PSS | Si:Al=2:1 |
| Poly(sialate-disiloxo) Mₙ-(Si-O-Al-O-Si-O-Si-O-)ₙ | M-PSDS | Si:Al=3:1 |

Les liants ou ciments géopolymères de type poly(sialate), poly(sialate-siloxo) et/ou poly(sialate-disiloxo), ont fait l'objet de plusieurs brevets mettant en évidence leurs propriétés particulières. On peut citer par exemple les brevets français: FR 2.489.290, 2.489.291, 2.528.818, 2.621.260, 2.659.319, 2.669.918, 2.758.323.

Les ciments géopolymères de l'art antérieur (WO 92/04298, WO 92/04299, WO 95/13995, WO 98/31644) sont le résultat d'une polycondensation entre trois réactifs minéraux distincts, c'est-à-dire:
a) l'oxyde aluminosilicate (Si₂O₅,Al₂O₂)
b) le disilicate de sodium ou de potassium (Na,K)₂(H₃SiO₄)₂.
c) le disilicate de calcium Ca(H₃SiO₄)₂

Avec le disilicate de potassium, la polycondensation est le résultat de la réaction chimique suivante: 2(Si₂O₅,Al₂O₂) + K₂(H₃SiO₄)₂ + Ca(H₃SiO₄)₂ ⇒ (K₂O,CaO)(8SiO₂,2Al₂O₃,nH₂O)(1) Il se forme le (K,Ca)-Poly(sialate-siloxo), (K,Ca)-PSS avec Si:Al=2. Ensuite on ajoute différentes charges minérales réactives comme les silices (fumée de silice), ou des alumino-silicates naturels.

Les ingrédients a) et b) sont des produits réactifs industriels ajoutés dans le milieu réactionnel. Par contre, l'ingrédient c), le disilicate de calcium, se produit à l'état naissant, in situ, dans le milieu fortement alcalin. Il est en général issue de la réaction chimique entre un silicate de calcium comme la mellilite de calcium présente dans le laitier de haut fourneau.

Une des propriétés intéressantes des ciments géopolymèriques est que pendant leur fabrication ils ne dégagent que très peu de gaz à effet de serre, le gaz carbonique CO₂. Au contraire, les ciments à base de clinker Portland, émettent énormément de gaz carbonique. Comme on peut le lire dans la publication intitulée Global Warming Impact on the Cement and Aggregates Industries, publiée dans World Resource Review, Vol.6, Nr 2, pp 263-278, 1994, une tonne de ciment Portland dégage 1 tonne de gaz CO₂, alors que un ciment géopolymèrique en dégage 5 à 10 fois moins. En d'autres termes, dans le cadre des lois internationales limitant dans le futur le dégagement de CO₂ une cimenterie fabricant initialement du ciment Portland pourra produire 5 à 10 fois plus de ciment géopolymère, tout en émettant la même quantité de gaz CO₂. L'intérêt pour les ciments géopolymères est très évident pour l'économie des pays en développement.

Ainsi le brevet Français FR 2.666.253 décrit un procédé d'obtention d'un ciment géopolymère, sans émanation de gaz carbonique CO₂, dans lequel la matrice après durcissement est un géopolymère de type (Ca,Na,K)-poly(sialate-siloxo), (Ca,Na,K)-PSS, dans lequel le rapport atomique Si:Al est égal à 2. Dans la présente invention, la matrice est de type (Ca,Na,K)-poly(sialate-disiloxo), (Ca,Na,K)-PSDS et le rapport atomique Si:Al dans la matrice vitreuse est voisin de 3, ceci étant caractéristique d'un géopolymère différent de celui de l'art antérieur.

On trouve cependant dans l'art antérieur un procédé de fabrication d'un géopolymère de type (Na,K)-poly(sialate-disiloxo), (Na,K)-PSDS. Ainsi dans le brevet européen EP 0 518 980 on utilise exclusivement une solution alcaline de silice thermique très spéciale car obtenue au four électrique et le mélange réactionnel est à base de silicates alcalins, de sodium Na, ou de potassium, K, mais n'inclut pas de calcium Ca. Dans la présente invention il n'est pas fait usage de ces silices thermiques artificielles, mais uniquement de matériaux alumino-silicates d'origine géologique, plus précisément des roches résiduelles à kaolinisation fortement avancée.

Dans un autre brevet de l'art antérieur, la publication WO 92/04299 du PCT/CH91/00187, il est fait mention d'un ciment à base de tecto-alumino-silicate obtenu par addition de métakaolin, de silice active, aluminosilicate chimiquement activé à une température entre 800°C et 1200°C, de silicate alcalin soluble, d'hydroxyde alcalin (KOH ou NaOH), et de silicate de calcium. On obtient ainsi un ciment aluminosilicate dont la formule générale mentionne un rapport atomique Al:Si de 4:6 à 4:14, soit un rapport Si:Al variant de 1.5 à 3.5. Cependant, il est bien précisé qu'il s'agit là d'une formule générale, englobant la somme de tous les composants, à savoir les composés solubilisés et formant la matrice, additionné des composés non solubilisés, encore à l'état de grains et de particules. En fait, dans ce ciment de l'art antérieur, la matrice active (appelée ici dans la présente invention matrice vitreuse) est du type (Ca,Na,K)-poly(sialate-siloxo), (Ca,Na,K)-PSS, comme les autres ciments géopolymèriques de l'art antérieur. La preuve en est donnée par la Figure 7 de la publication WO 92/04299 qui reproduit le spectre en Résonance Magnétique Nucléaire de 29Si. Ce spectre de 29Si est constitué de deux résonances l'une à -94.5 ppm, l'autre à -113.9 ppm et est similaire à celui du ciment géopolymère décrit aux pages 113 à 117 de la publication dont le titre est: Geopolymers: Man-Made Rock Geosynthesis and the resulting development of very early high strength cement, publiée dans Journal of Material Education, Vol.16, pp. 91-137" 1994 (voir aussi à la page 136-138 de la publication intitulée: *Properties of Geopolymer Cements,* publiée dans Proceedings of the First International Conference on Alkaline Cements and Concretes, Kiev, 1994). La première résonance à -94.5 ppm correspond à un groupement SiQ4(2Al), c'est-à-dire précisément la structure poly(sialate-siloxo) PSS, avec Si:Al = 2. La seconde résonance à -113.9, est celle de SiO2, SiQ4(0Al), c'est à dire soit du quartz, soit de la silice en grains, non dissoute. La formule chimique générale indiquée dans la publication WO 92/04299, dans laquelle le rapport Si:Al varie de 1.5 à 3.5, est bien le résultat de l'addition de tous les éléments, en particulier des silices insolubles, et non pas celle de la seule matrice vitreuse, qui elle possède un rapport Si:Al voisin de 2. Au contraire, dans la présente invention, la formule de la matrice vitreuse ne prend pas en compte les particules et grains qui sont enrobés en elle. Dans la matrice de la présente invention, ledit composé géopolymère de type Poly(sialate-disiloxo) consiste en un mélange de différentes variétés de polysialates dans lesquels le rapport atomique Si:Al varie entre 2 et 5.5, la moyenne des valeurs du rapport atomique Si:Al étant proche de 2.8 à 3. Les autres constituants dudit liant ou ciment géopolymèrique comme les particules de mellilite, les particules d'alumino-silicates, les particules de quartz ou les particules de silice, n'entrent pas dans le calcul de ce rapport atomique Si:Al.

Un autre exemple de ciment géopolymèrique de l'art antérieur est décrit dans la publication WO 98/31644 pour PCT/FR98/00059. Dans cette description, la matrice vitreuse géopolymèrique est caractérisée par son spectre MAS-NMR pour 29Si. Ainsi on peut lire à la page 9, lignes 1-7 que le spectre possède une bande comprise entre -85 et -89 ppm caractéristique d'un mélange de sites (SiO4) de type SiQ4(3Al,1Si) associé à un aluminosilicate hydroxylé constitué de (SiO4) de type Q3(2Si,1Al,1OH). Ceci définit un composé géopolymèrique constitué d'un mélange de poly(sialate) simple, Si:Al=1 et de poly(sialate-siloxo), Si:Al=2, ledit composé ayant un rapport Si=Al voisin de 1.6. Une telle matrice est décrite ci-après dans l'Exemple 1.

Tous les ciments géopolymèriques de l'art antérieur sont caractérisés par une granulométrie extrêmement fine des principaux constituants solides. La granulométrie moyenne est de l'ordre de 8 microns (WO 98131644, page 9 ligne 36 et page 10 ligne 17), voir même de 3.5 microns (WO 92/04299, page 16 Beispiel 4). En effet, dans l'art antérieur l'objectif est de produire un ciment à prise ultra rapide et pour cela il faut assurer une solubilisation maximale des réactifs solides, d'où la nécessité d'une granulométrie la plus fine possible. Ainsi on peut lire dans la publication WO 92/04298 page 10 lignes 10-16 et 38-40 que les silicates basiques sont transformés au bout de 30 minutes en disilicate de calcium soluble naissant. Au contraire, dans la présente invention, le diamètre moyen est compris entre 15 microns et 25 microns, empêchant ainsi la dissolution des particules de mellilite et silicoaluminates naturels dans ladite matrice vitreuse amorphe. Dans la présente invention, le mécanisme de durcissement est différent de celui de l'art antérieur, puisqu'il n'y a pas formation de disilicate de calcium, mais essentiellement échanges cationiques entre le cation alcalin (Na,K)⁺ et le cation Calcium Ca⁺⁺.

### Exposé de l'invention :

L'objet principal de l'invention est la description d'un liant ou ciment géopolymèrique constitué d'une matrice vitreuse amorphe enrobant des particules de mellilite, des particules d'alumino-silicates et des particules de quartz, ces dites particules ayant un diamètre moyen inférieur à 50 microns. Dans le liant ou ciment de la présente invention ladite matrice vitreuse amorphe est constituée par un composé géopolymère de type Poly(sialate-disiloxo), de formule approchée (Na,K,Ca)(-Si-O-Al-O-Si-O-Si-O), ou (Na,K,Ca)-PSDS. Le composé géopolymère de type Poly(sialate-disiloxo) consiste en un mélange de différentes variétés de polysialates dans lesquels le rapport atomique Si:Al varie entre 2 et 5.5, la moyenne des valeurs du rapport atomique Si:Al étant proche de 2.8 à 3. Les autres constituants dudit liant ou ciment géopolymèrique comme les particules de mellilite, les particules d'alumino-silicates et les particules de quartz, n'entrent pas dans le calcul de ce rapport atomique Si:Al.

Pour obtenir ce nouveau liant ou ciment géopolymèrique on fait durcir un mélange réactionnel contenant
a) une roche résiduelle de type granit fortement altéré dans laquelle la kaolinisation est très avancée;
b) un verre de mellilite de calcium dans lequel la partie verre est supérieure à 70% en poids;
c) un silicate alcalin soluble dans lequel le rapport molaire (Na,K)₂O:SiO₂ est compris entre 0.5 et 0.8 ;
Ladite roche résiduelle de type granit altéré est constituée de 20 à 80 pour cent en poids de kaolinite et 80 à 20 pour cent en poids d'arènes résiduelles feldspathiques et quartziques. Afin d'augmenter les caractéristiques des liants ou ciments géopolymèriques de la présente invention il est préférable que ladite roche résiduelle soit calcinée à une température comprise entre 650°C et 950°C. On peut dans ce cas utiliser à titre de roche résiduelle de type granit altéré, un déchet minier provenant de l'extraction du charbon.

Dans la préparation des liants et ciments selon la présente invention, le diamètre moyen de la répartition granulométrique du verre de mellilite de calcium est compris entre 15 microns et 25 microns, empêchant ainsi la dissolution de ces particules de mellilite dans ladite matrice vitreuse amorphe

### Meilleures manières de réaliser l'invention

L'analyse scientifique des liants ou ciments géopolymèriques est faite à l'aide de la microsonde au microscope électronique. Cette technique permet de mettre en évidence sans équivoque la composition chimique des trois constituants principaux des ciments de la présente invention à savoir:
- la matrice vitreuse, c'est-à-dire la matrice amorphe à la diffraction aux Rayons X,
- les particules de verre de mellilite de calcium
- les particules rocheuses d'alumino-silicates (feldspaths, plagioclase, feldspathoïde, zéolithe, pyroxène, amphibole) et quartz.

Les liants ou ciments de la présente invention sont illustrés par les exemples suivants. Ils n'ont pas de caractère limitatif sur la portée globale de l'invention telle que présentée dans les revendications. Toutes les parties indiquées sont en poids.

### Exemple 1

Afin de mieux comprendre la différence entre la matrice vitreuse de la présente invention et celles de l'art antérieur, on reproduit dans cet exemple le ciment dit "base" décrit dans la publication WO 98/31644, page 9, lignes 30-39, c'est-à-dire:

| | |
|---|---|
| - argile kaolinique calcinée oxyde aluminosilicate (Si₂O₅,Al₂O₂) | 30 parties |
| - solution silicate de K , (en poids) K₂O:26%, SiO₂:21%, H₂O:53% | 25 parties |
| - laitier de haut-fourneau (mellilite de calcium) granulométrie moyenne 8 microns | 27 parties |
| - eau | 31 parties |

L'objectif de l'art antérieur étant de fabriquer in situ le disilicate de calcium Ca(H₃SiO₄)₂, l'examen au microscope électronique du ciment ainsi obtenu doit montrer la disparition des particules de mellilite de calcium, comme on peut le lire dans cette même publication à la page 7, lignes 13-20, à savoir: "... *Lorsque l'on regarde au microscope [électronique à balayage] les ciments durcis à partir des mélanges décrits dans les exemples 1 à 10, on constate que, dans le cas du laitier de haut-fourneau, la majorité des grains de laitier ont disparu. On voit seulement une empreinte de leur forme initiale, sous la forme d'une enveloppe vraisemblablement constituée d'akermanite qui n'a pas réagi. Ce processus est très régulier et peut être complet en 30 minutes, à la température ambiante. ..)*

La composition chimique exprimée en oxydes de ce ciment est donnée dans le Tableau 1. Les valeurs de l'eau ont été omises volontairement.

**Tableau 1**

| | **SiO₂** | **Al₂O₃** | **Fe₂O₃** | **MgO** | **CaO** | **Na₂O** | **K₂O** |
|---|---|---|---|---|---|---|---|
| **(Si₂O₅,Al₂O₂)** | 16.33 | 12.76 | 0.15 | 0.096 | 0.012 | 0.042 | 0.439 |
| **mellilite de Ca** | 9.58 | 3.24 | 0.054 | 2.43 | 11.34 | 0.054 | 0.135 |
| **K-silicate sol.** | 5.23 | 0 | 0 | 0 | 0 | 0 | 6.495 |
| **total oxyde en poids** | 31.15 | 16.00 | 0.210 | 2.52 | 11.35 | 0.096 | 7.069 |
| **total en mole** | 0.519 | 0.157 | | 0.063 | 0.20 | 0.0015 | 0.0752 |

De la valeur des oxydes exprimée en mole, on en déduit les rapports atomiques suivant:

| | | | |
|---|---|---|---|
| Si:Al=1:1 | 1.65 | | |
| Si:Al=2:1 | 0.48 | Si:K | 3.43 |
| Si:Al=3:1 | 0.65 | Si | 2.53 |

Après durcissement, l'analyse à la microsonde électronique fournit la composition chimique exprimée en oxydes de la matrice vitreuse dans laquelle les grains de mellilite de calcium ont pratiquement tous disparu. Seuls restent quelques gros grains de dimension supérieure à 20 microns. On effectue 14 mesures à la microsonde dans la matrice vitreuse. La moyenne de ces mesures donne les rapports atomiques suivants (entre parenthèse la valeur la plus faible et la plus élevée):

| | | | |
|---|---|---|---|
| Si:Al | 1.655 (1.317 à 1.832) | | |
| K:Al | 0.442 (0.192 à 0.614) | Si:K | 3.73 |
| Ca:Al | 0.679 (0.388 à 0.870) | Si:Ca | 2.43 |

Il y a bien eu dissolution de la mellilite de calcium avec formation in situ de disilicate de calcium Ca(H₃SiO₄)₂ . Ceci définit un composé géopolymèrique constitué d'un mélange de poly(sialate) simple (K,Ca)-PS, Si:Al=1, et de poly(sialate-siloxo), (K,Ca)-PSS, Si:Al=2, ledit composé ayant un rapport Si=Al voisin de 1.6, selon la réaction chimique (1) décrite ci-dessus.

### Exemple 2

On prépare un premier mélange en poudre aluminosilicate A) comprenant:
- mélange A)

| | |
|---|---|
| oxyde aluminosilicate (Si₂O₅,Al₂O₂) | 30 parties |
| roche feldspathique broyée à 15-25 microns | 50 parties |
| mellilite, de calcium broyée à 15-25 microns | 30 parties |

Ces 110 parties de mélange A) sont ajoutées au mélange réactionnel B) contenant:
- mélange B)

| | |
|---|---|
| la solution silicate de K , | |
| (en poids) K₂O:26%, SiO₂:21%, H₂O:53% | 30 parties |
| eau | 15 parties |

Comme on le constate, la granulométrie moyenne de la roche feldspathique et de la mellilite de calcium est bien plus élevée, puisqu'elle se situe entre 15-25 microns, ce qui est bien différent de l'art antérieur. Outre les brevets déjà cités plus haut qui préconisent tous des granulométries moyennes inférieures à 10 microns, on peut aussi citer les brevets Forss qui les premiers ont préconisé l'activation alcaline du laitier de haut-fourneau, comme par exemple le brevet US 4.306.912. Dans les brevets Forss, la granulométrie moyenne est exprimée par la surface spécifique qui est supérieure à 400 m2/kg, de préférence comprise entre 500 et 800 m2/kg, c'est-à-dire en dessous de 10 microns.

On laisse durcir ce mélange à la température ambiante. La résistance à la compression à 28 jours est de 70 MPa. Puis on examine au microscope électronique. Le ciment géopolymèrique obtenu est constitué de trois éléments distincts:
a) une matrice vitreuse
b) des particules de mellilite de calcium
c) des particules de roche feldspathique

On détermine à la microsonde la composition chimique de ces trois éléments. La moyenne de ces mesures donne les rapports atomiques suivants (entre parenthèse la valeur la plus faible et la plus élevée):
a) matrice vitreuse

| | | | |
|---|---|---|---|
| Si:Al | 2.854 (2.047 à 5.57) | | |
| K:Al | 0.556 (0.306 à 0.756) | Si:K | 6.13 (3.096 à 9.681) |
| Ca:Al | 0.286 (0.107 à 0.401) | Si:Ca | 15.02 (4.882 à 41.267) |

b) particules de mellilite de calcium

Le Tableau II donne la composition chimique de la mellilite de calcium, et la moyenne des 15 mesures fournies par la microsonde électronique (valeurs exprimées en poids).

**Tableau II**

| | Mellilite de Ca | Moyenne générale microsonde |
|---|---|---|
| K₂O | 0.5 | 1.55 |
| SiO₂ | 35.5 | 35.38 |
| CaO | 42 | 37.57 |
| Na₂O | 0.2 | 0.22 |
| Al₂O₃ | 12 | 11.93 |
| MgO | 9 | 8.59 |

c) particules de roche feldspathique

le Tableau III donne la composition chimique de la roche feldspathique et la moyenne des 15 mesures fournies par la microsonde électronique pour les particules de feldspath alcalin (valeurs exprimées en poids).

**Tableau III**

| | roche feldspathique | Moyenne microsonde feldspath |
|---|---|---|
| K₂O | 4.89 | 7.55 |
| SiO₂ | 74.16 | 66.05 |
| CaO | 0.43 | 0.38 |
| Na₂O | 4.33 | 6.20 |
| Al₂O₃ | 13.80 | 19.25 |
| MgO | 0.17 | 0.02 |

On constate tout d'abord que dans la matrice vitreuse le rapport Si:Al est bien plus élevé que celui de l'Exemple 1) puisque la moyenne passe de 1.65 à 2.85. Il y a donc un apport supplémentaire de silice qui ne peut provenir que de la partie siliceuse de la roche feldspathique, puisque la teneur en SiO₂ dans celle-ci diminue de 74,16 à 66,05 comme on peut le le lire dans le Tableau III. Or, d'après le Tableau II, il n'y a pas de différence entre l'analyse chimique de la mellilite de Ca effectuée avant le mélange et la moyenne des 15 mesures à la microsonde ; la quantité en SiO₂ reste égale à 35.5 environ. En d'autres termes, la silice que l'on trouve dans la matrice vitreuse de cet Exemple 2) ne provient pas de la mellilite de calcium, mais exclusivement de la roche feldspathique. Contrairement aux ciments de l'art antérieur, il n'y a pas de production de disilicate de calcium Ca(H₃SiO₄)₂

On constate ensuite que dans le Tableau II, la quantité de K₂O à plus que triplé dans les particules de mellilite de Calcium, passant de 0.5 à 1.55 avec des valeurs pouvant atteindre 4.11 voir même 8.2 pour certaines particules. D'un autre coté, la quantité de CaO est passée de 42 à 37.5. On comprend donc pourquoi dans la matrice vitreuse de cet Exemple 2), la quantité de potassium K est plus faible que dans la matrice de l'Exemple 1). Une partie du potassium présent dans le milieu réactionnel est venue se fixer dans les particules de mellilite de Ca, en remplacement des atomes de Calcium qui ont été se fixer dans la matrice vitreuse géopolymèrique. Le durcissement à la température ambiante se caractérise pour la mellilite de calcium par une diminution de 10 à 20 % en poids de sa teneur en CaO, accompagnée simultanément d'une augmentation de 100 à 500 % (en moyenne de 300%) en poids de sa teneur en K₂O, la teneur des autres composants comme SiO₂, Al₂O₃ et MgO, restant inchangée. Cet échange est une complète surprise, car rien dans l'art antérieur ne prévoyait ce mécanisme. On suppose qu'il est essentiellement due au fait que les granulométries de la mellilite de Ca étant plus élevées que dans l'art antérieur, le mécanisme de dissolution de la silice présente dans la roche feldspathique est beaucoup plus rapide que celui de la dissolution du disilicate de calcium. Seule une petite quantité de calcium a le temps de sortir de la particule de mellilite pour être immédiatement remplacée par une certaine quantité de potassium.

Une autre surprise provient du fait que ce mécanisme aboutit à la formation d'un ciment géopolymèrique ayant des résistances mécaniques bien supérieures à celles de l'art antérieur. Ainsi dans la publication WO 98/31644 les résistances à la compression à 28 jours sont en moyenne comprise entre 30 et 60 MPa, alors que dans cet Exemple 2) elles sont comprises entre 80 et 100 MPa. La structure géopolymèrique de type (K,Ca)-Poly(sialate-disiloxo) (K,Ca)-PSDS est donc 50% à 60% plus résistante mécaniquement que celle de type (K, Ca)-Poly(sialate-siloxo) (K,Ca)-PSS de l'art antérieur.

### Exemple 3

On reprend le mélange réactionnel de l'Exemple 2), mais dans le mélange A) on ajoute 45 de mellilite de Calcium de granulométrie moyenne 15-25 microns, au lieu de 30 parties. Les autres conditions sont inchangées. La résistance à la compression à 28 jours du ciment géopolymèrique est de 120-130 MPa.

Au lieu de faire comme dans l'Exemple 2) un mélange d'oxyde aluminosilicate et de roche feldspathique, on peut directement trouver géologiquement des gisements contenant naturellement ces deux éléments intimement liés. En effet, l'art antérieur nous enseigne que l'oxyde aluminosilicate (Si₂O₅,Al₂O₂) est obtenu par calcination de la kaolinite entre 650°C et 950°C. Cette substance, la kaolinite, est le résultat de l'altération des feldspaths et se trouve donc naturellement dans les roches résiduelles granitiques altérées. La roche résiduelle de type granit altéré est constituée de 20 à 80 pour cent en poids de kaolinite et 80 à 20 pour cent en poids d'arènes résiduelles feldspathiques, quartziques contenant de la silice réactive.

Afin d'avoir une réactivité maximale, la roche résiduelle de type granit fortement altéré dans lequel la kaolinisation est très avancée sera calcinée à une température comprise entre 650°C et 950°C et broyée à une granulométrie moyenne de 15-25 microns pour les parties feldspathiques et quartziques, la partie kaolinitique étant par nature de granulométrie bien inférieure.

### Exemple 4

On reprend le mélange réactionnel de l'exemple 3) mais au lieu d'effectuer un mélange d'oxyde aluminosilicate et de roche feldspathique, on ajoute 100 parties d'un granit résiduel contenant initialement 35% en poids de kaolin. Ce granit a été calciné à 750°C pendant 3 heures, puis broyé à une granulométrie moyenne de 15-25 microns pour les parties feldspathiques et quartziques. Les autres conditions sont inchangées. La résistance à la compression à 28 jours du ciment géopolymèrique est de 125 MPa.

### Exemple 5

On choisit comme roche résiduelle de type granit fortement altéré dans laquelle la kaolinisation est très avancée, le déchet rocheux d'extraction d'une mine de charbon. Dans le monde, les veines de charbon sont assez souvent emprisonnées entre des couches géologiques de granit kaolinitique. Quelquefois, le charbon ayant été naturellement enflammé, la chaleur a été suffisante pour transformer la partie kaolinite en oxyde aluminosilicate (Si₂O₅,Al₂O₂). Un tel gisement naturel existe en Australie, mais n'est pas exploité. Par contre on peut avantageusement calciner le déchet rocheux kaolinitique dans les mines de charbon exploitées. L'analyse chimique d'une roche de ce type est la suivante

| | |
|---|---|
| charbon | 3.07 |
| SiO2 | 63.71 |
| Al2O3 | 13.44 |
| Fe2O3+FeO | 4.72 |
| MgO | 2.31 |
| CaO | 2.72 |
| Na2O | 1.88 |
| K2O | 2.40 |
| H2O+ | 3.20 |
| H2O- | 1.34 |

Elle contient environ 25% de plagioclase (feldspath), 30% de quartz, 10% d'amphibole, 27% de kaolinite, 3% de charbon et 6% d'autres éléments.

On calcine à 750°C pendant 3 heures. puis on broie à une granulométrie moyenne de 15-25 microns.

On réalise ensuite le mélange réactionnel suivant:

| | | |
|---|---|---|
| a) déchet de charbon kaolinitique précédent, | | 90 parties |
| b) mellilite de calcium broyée à 15-25 microns | | 30 parties |
| c) solution silicate de K , | | |
| | (en poids) K₂O:26%, SiO₂:21%, H₂O:53% | 30 parties |
| | eau | 20 parties |

On fait durcir à la température ambiante. La résistance à la compression à 7 jours est de 40 MPa, et la résistance à 28 jours est de 105 MPa. Le pH du ciment géopolymèrique mesuré à l'équilibre dans une solution à 10% est de pH=12.14 à 7 jours et pH=1 11.85 à 28 jours.

Il est intéressant de comparer la dépense en énergie ainsi que l'émission en gaz a effet de serre CO₂ entre les ciments Portland traditionnels et le ciment géopolymèrique selon la présente invention

### Depense en énergie, en MJ/tonne

| type | calcination | broyage | total |
|---|---|---|---|
| Portland | 3200 | 430 | 3430 |
| geopolymerique | 600 | 390 | 990 |

### Emission en gaz à effet de serre, CO₂ en tonne/tonne

| | |
|---|---|
| Portland | 1.00 |
| geopolymerique | 0.15-0.20 |

La fabrication de ciment géopolymèrique dont la matrice vitreuse amorphe est constituée par un composé géopolymère de type Poly(sialate-disiloxo), de formule approchée (Na,K,Ca)(-Si-O-Al-O-Si-O-Si-O), ou (Na,K,Ca)-PSDS n'exige que 3.5 fois moins d'énergie que celle du ciment Portland; en plus elle émet 5 à 6 fois moins de gaz à effet de serre CO₂. L'intérêt industriel des ciments selon la présente invention est donc évident.

## Revendications

1. Liant ou ciment géopolymèrique constitué d'une matrice vitreuse amorphe enrobant des particules de mellilite, des particules d'alumino-silicates et des particules de quartz, ces dites particules ayant un diamètre moyen inférieur à 50 microns, ***caractérisé* en ce que** ladite matrice vitreuse amorphe est constituée par un composé géopolymère de type Poly(sialate-disiloxo), de formule approchée (Na,K,Ca)(-Si-O-Al-O-Si-O-Si-O), ou (Na,K,Ca)-PSDS.

2. Liant ou ciment géopolymèrique selon la revendication 1), ***caractérisé* en ce que** ledit composé géopolymère de type Poly(sialate-disiloxo) consiste en un mélange de différentes variétés de polysialates dans lesquels le rapport atomique Si:Al varie entre 2 et 5.5, la moyenne des valeurs du rapport atomique Si:Al telles que mesurées à la microsonde électronique étant proche de 2.8 à 3, les autres constituants dudit liant ou ciment géopolymèrique comme les particules de mellilite, les particules d'alumino-silicates et les particules de quartz, n'entrant pas dans le calcul de ce rapport atomique Si:Al.

3. Liant ou ciment géopolymèrique selon l'une quelconque des revendications 1) et 2), ***caractérisé* en ce que** dans ladite matrice vitreuse amorphe, la moyenne des valeurs du rapport atomique Si:(Na,K) telles que mesurées à la microsonde électronique est proche de 6, variant par exemple de 3.096 à 9.681 .

4. Liant ou ciment géopolymèrique selon l'une quelconque des revendications 1) à 3), ***caractérisé* en ce que** dans ladite matrice vitreuse amorphe, la moyenne des valeurs du rapport atomique Si:Ca telles que mesurées à la microsonde électronique est proche de 15 variant par exemple de 4.882 à 41.267.

5. Liant ou ciment géopolymèrique selon l'une quelconque des revendications 1) à 4), ***caractérisé* en que** dans la répartition granulométrique du verre de mellilite de calcium, le diamètre moyen est compris entre 15 microns et 25 microns, empêchant ainsi la dissolution de ces particules de mellilite dans ladite matrice vitreuse amorphe.

6. Liant ou ciment géopolymèrique selon l'une quelconque des revendications 1) à 5), ***caractérisé* en ce que** le durcissement à la température ambiante se caractérise pour la mellilite de calcium par une diminution de 10 à 20 % en poids de sa teneur en CaO, accompagnée simultanément d'une augmentation de 100 à 500 % (en moyenne de 300%) en poids de sa teneur en K₂O, la teneur des autres composants comme SiO₂, Al₂O₃ et MgO, restant inchangée.

7. Liant ou ciment géopolymèrique selon l'une quelconque des revendications 1) à 6), ***caractérisé* en ce que** lesdites particules d'alumino-silicates et lesdites particules de quartz ont pour origine une roche résiduelle de type granit altéré.

8. Liant ou ciment géopolymèrique selon la revendication 7), ***caractérisé* en ce que** ladite roche résiduelle de type granit altéré est un déchet minier provenant de l'extraction du charbon.

9. Ciment géopolymèrique selon l'une quelconque des revendications 1) à 8), ***caractérisé* en ce que** sa fabrication ne produit que très peu de gaz carbonique CO₂ à effet de serre.

## Claims

1. Geopolymeric binder or cement consisting in an amorphous vitreous matrix embedding mellilite particles, aluminosilicate particles and quartz particles, said particles having an average diameter lower than 50 microns, wherein said amorphous vitreous matrix comprises a geopolymer compound of the Poly(sialate-di siloxo) type, with the approximate formula (Na, K, Ca)(-Si-O-Al-O-Si-O-Si-O), or (Na, K, Ca)-PSDS.

2. Geopolymeric binder or cement according to claim 1), wherein said geopolymer compound of the Poly(sialate-disiloxo) type consists of a mixture of various varieties of polysialates in which the atomic ratio Si:Al varies between 2 and 5.5, the average of the values of the atomic ratio Si:Al being close to 2.8 to 3. The other components of the said geopolymeric binder or cement, such as the mellilite particles, the aluminosilicate particles and the quartz particles, do not enter into the calculation of this atomic ratio Si:Al.

3. Geopolymeric binder or cement according to any one of the claims 1) and 2), wherein in said amorphous vitreous matrix, the average of the values of the atomic ratio Si:(Na, K) as measured with the electronic micro beam analysis is close to 6, varying from 3.096 to 9.681.

4. Geopolymeric binder or cement according to any one of the claims 1) to 3), wherein in the said amorphous vitreous matrix, the average of the values of the atomic ratio Si:Ca as measured with the electronic micro beam analysis is close to 15 varying from 4.882 to 41.267.

5. Geopolymeric binder or cement according to any one of the claims 1) to 4), wherein the average grain size distribution of calcium mellilite glass, ranges between 15 microns and 25 microns, thus preventing the dissolution of these mellilite particles in the said amorphous vitreous matrix.

6. Geopolymeric binder or cement according to any one of the claims 1) to 5), wherein, during hardening at ambient temperature, calcium mellilite shows a reduction of 10 to 20 % by weight of its content in CaO, accompanied simultaneously by an increase of 100 to 500 % (on average 300%) by weight of its content in K₂O, the content of the other components like SiO₂, Al₂O₃ and MgO, being unchanged.

7. Geopolymeric binder or cement according to any one of the claims 1) to 6 wherein said aluminosilicate particles and said quartz particles are found in a weathered granitic rock.

8. Geopolymeric binder or cement according to claim 7), wherein said weathered granitic rock is a mining waste resulting from the extraction of coal.

9. Geopolymeric cement according to any one of the claims 1) to 8), that during its manufacture produces very little of the greenhouse gas, carbon dioxide, CO₂.

## Patentansprüche

1. Geopolymere Bindemittel oder Zement die aus amorpher glasartiger Matrix bestehen, die ihrerseits von Mellilitenpartikel, beziehungsweise Aluminosilikat- und Quartzpartikel umhüllt werden, diese besagten Partikel besitzen einen mittleren Durchmesser der kleiner ist als 50 Mikrons, **dadurch** gezeichnet, dass die besagte amorphe glasartige Matrix aus einer geopolymeren Verbindung vom Typ Poly(sialat-disiloxo) nach der Formel (Na,K,Ca)(-Si-O-Al-O-Si-O-Si-O-) oder kurz (Na,K,Ca)-PSDS besteht.

2. Geopolymere Bindemittel oder Zement nach Anspruch 1) **dadurch** gezeichnet, dass die besagte geopolymere Verbindung vom Typ Poly(sialat-disiloxo) besteht, die aus einer Mischung von verschiedenen Polysialaten, bei denen das atomare Verhältnis Si:Al zwischen 2 und 5,5 liegt, und die Mittelwerte mit dem Elektronenmikroskop gemessen im Bereich von 2,8 bis 3 liegen, während die anderen Anteile in den besagten Bindemitteln oder Zement, wie Mellilite, beziehungsweise Alumino-silikat- und Quarzpartikel nicht in der Berechnung des atomaren Verhältnisses Si:Al einbezogen sind.

3. Geopolymere Bindermittel oder Zement nach irgend einer der Ansprüche 1) oder 2) **dadurch** gezeichnet, dass in besagter amorpher glasartiger Matrix die Mittelwerte des atomaren Verhältnisses Si:(Na,K), gemessen mit dem Elektronenmikroskop, nahe bei 6 sind und innerhalb von 3,096 bis 9,681 liegen.

4. Geopolymere Bindemittel oder Zement nach irgend einer der Ansprüche 1) bis 3) **dadurch** gezeichnet, dass in besagter amorpher glasartiger Matrix die Mittelwerte des atomaren Verhältnisses Si:Ca, gemessen mit dem Elektronenmikroskop, nahe 15 liegen und sich innerhalb von 4,882 bis 41,267 bewegen.

5. Geopolymere Bindemittel oder Zement nach irgend einer der Ansprüche 1) bis 4) **dadurch** gezeichnet, dass die Granulometrie von Kalzium Mellilitenglas einen mittleren Durchmesser zwischen 15 Mikrons und 25 Mikrons aufweist welche **dadurch** die Auflösung der Mellilitenpartikel in besagter amorpher glasartiger Matrix verhindert.

6. Geopolymere Bindemittel oder Zement nach irgend einer der Ansprüche 1) bis 5) **dadurch** gezeichnet, dass beim Erhärten bei Zimmertemperatur die Zusammensetzung der Kalzium Mellilite eine Verringerung des CaO-Inhaltes von 10 bis 20 Gewichtsprozenten aufweist, dies zusammen mit einer Erhöhung von 100 bis 500 Gewichtsprozenten (Mittelwert 300%) seiner Bestandteilen an K₂O. Die Menge der anderen Anteile wie SiO₂, Al₂O₃, MgO, bleiben unverändert.

7. Geopolymere Bindemittel oder Zement nach irgend einer der Ansprüche 1) bis 6) **dadurch** gezeichnet, dass die besagten Alumino-silikat- und Quarzpartikel zu einem Gestein vom Typ verwitterter Granit gehören.

8. Geopolymere Bindemittel oder Zement nach Anspruch 7) **dadurch** gezeichnet, dass der besagte verwitterte Granit im Abfall des Kohlebergbaus zu finden ist.

9. Geopolymere Bindemittel oder Zement nach irgend einer der Ansprüche 1) bis 8) **dadurch** gezeichnet, dass ihre Herstellung sehr wenig Karbondioxyde CO₂ ausstößt.
